# EUROPÄISCHE PATENTANMELDUNG

(11) **EP 1 746 338 A1**
(43) Veröffentlichungstag der Anmeldung: **24.01.2007**
(21) Anmeldenummer: 06013288.3
(22) Anmeldetag: 28.06.2006
(51) Int. Cl.: F21S 8/00, F21S 10/02

(54) **Leuchte**

(30) Priorität: 22.07.2005 DE 102005035007
(71) Anmelder: ERCO Leuchten GmbH, 58507 Lüdenscheid (DE)
(72) Erfinder: Klose, Leonhard, 58513 Lüdenscheid (DE)
(74) Vertreter: Ostriga, Sonnet, Wirths & Roche

(57) **Zusammenfassung**

Beschrieben und dargestellt ist eine Leuchte (10), insbesondere zur Befestigung an einer Gebäude- oder Gebäudeteilfläche (11), umfassend einen wannenförmigen, eine reflektierende Innenseite aufweisenden Reflektor (16) mit wenigstens zwei Seitenwänden, wobei eine erste Seitenwand (18) einer zweiten Seitenwand (19) gegenüberliegt, und mit einer Lichtaustrittsöffnung (23), in der ein Diffusorelement (24) angeordnet ist.

Die Besonderheit besteht darin, dass zumindest die erste Seitenwand (18) und die dieser gegenüberliegende zweite Seitenwand (19) jeweils wenigstens einen entlang einer Ebene ausgerichteten Abschnitt (18, 19) aufweisen, an dem mehrere LED's (27a, 27b, 27c, 27d, 27e, 27f, 27g) angeordnet sind, wobei die Leuchte LED's unterschiedlicher Farben aufweist, und wobei die LED's derart angeordnet sind, dass der überwiegende Anteil des von einer an einer Seitenwand (18) angeordneten LED (27a) ausgesandten Lichtes erst nach Reflexion an einer anderen Seitenwand (19) zu dem Diffusorelement (24) gelangt.

## Beschreibung

Die Erfindung betrifft eine Leuchte gemäß dem Oberbegriff des Anspruches 1.

Es handelt sich insbesondere um eine Gebäudeleuchte, die z.B. an der Decke eines Raumes befestigt werden kann. Gleichermaßen kann es sich bei der Leuchte aber auch um eine Außenraumleuchte handeln. Vorzugsweise dient die Leuchte zur Ausleuchtung von Gebäudeflächen. Dabei ist es grundsätzlich gewünscht, eine homogene Lichtverteilung, und im Falle unterschiedlich farbiger Leuchtmittel, auch eine möglichst homogene farbliche Durchmischung zu erzielen.

Eine durch offenkundige Vorbenutzung bekannt gewordene Leuchte der Anmelderin weist einen im Wesentlichen wannenförmigen, eine reflektierende Innenseite aufweisenden Reflektor auf. Die unter der Bezeichnung focalflood bekannt gewordene Leuchte der Anmelderin weist in dem Innenraum des Reflektors drei Leuchtstofflampen unterschiedlicher Farben auf, die zur Erzielung unterschiedlicher Mischfarben angesteuert werden können. Der einstückig ausgebildete wannenartige Reflektor weist zwei Längsseitenwände und eine Bodenwand auf, wobei die Wände derart angeordnet sind, dass sich insgesamt ein im Wesentlichen parabolförmiger Querschnitt ergibt. Der Scheitelbereich des Reflektors bildet die Bodenwand des Reflektors. Außerdem sind zwei Schmalseitenwände an den Stirnseiten des Reflektors vorgesehen. Ein Diffusorelement ist in der Lichtaustrittsöffnung angeordnet und mischt die Lichtanteile der Grundfarben der drei Leuchtmittel.

Ausgehend von der bekannten Leuchte besteht die Aufgabe der Erfindung darin, unter Verwendung von LED's als Leuchtmittel eine Leuchte bereitzustellen, die eine Auflösbarkeit der Strukturen der einzelnen Leuchtmittel weitgehend verhindert und die bei kompakter Bauweise die Möglichkeit einer einfachen Montage bietet.

Die Erfindung löst diese Aufgabe mit den Merkmalen des Anspruches 1, insbesondere mit denen des Kennzeichenteils, und ist demgemäß dadurch gekennzeichnet, dass zumindest die erste Seitenwand und die dieser gegenüberliegende zweite Seitenwand jeweils wenigstens einen entlang einer Ebene ausgerichteten Abschnitt aufweisen, an dem mehrere LED's angeordnet sind, wobei die Leuchte LED's unterschiedlicher Farben aufweist, und wobei die LED's derart angeordnet sind, dass der überwiegende Anteil des von einer an einer Seitenwand angeordneten LED ausgesandten Lichtes erst nach Reflexion an einer anderen Seitenwand zu dem Diffusorelement gelangt.

Das Prinzip der Erfindung besteht zunächst darin, an dem Reflektor Seitenwandabschnitte vorzusehen, die plan oder flächig, das heißt entlang einer Ebene ausgerichtet, ausgebildet sind. Diese ermöglichen einerseits eine besonders einfache Befestigung der LED's, die z.B. von einer Leiterplatte getragen werden können, an dem Reflektor. Die Leiterplatte kann auf besonders einfache Weise, flächig anliegend, an dem ebenen Abschnitt befestigt werden, so dass mit einfachsten Befestigungsmitteln eine einfache und sichere Montage möglich wird. Ein mögliches flächiges Anliegen der Leiterplatte an dem ebenen Abschnitt ermöglicht dabei auch eine stabile Anordnung der Leiterplatte an dem Reflektorelement. Die Anbringung eines ebenen Abschnittes ermöglicht die Bereitstellung einer großflächigen Positionierfläche für die Leiterplatte.

Die LED's können beispielsweise durch Öffnungen in dem Abschnitt in den Innenraum des Reflektors hineinragen, während die Leiterplatte auf der Außenseite des Abschnittes des Reflektors flächig anliegt. Durch Anordnung der Leiterplatte außerhalb des Innenraumes des Reflektors kann die Leiterplatte die Lichtausbreitung und die Lichtweiterleitung innerhalb des Reflektors nicht beeinträchtigen.

Die flächige Ausbildung eines Abschnittes einer Seitenwand des Reflektors ermöglicht neben der Anbringung flächiger Leiterplatten mit LED's und der einfachen Befestigung der Leiterplatten auch die einfache Anbringung eines Kühlkörpers auf der Außenseite der Leiterplatte, so dass auch das Kühlelement die Lichtmischung und Lichtweiterleitung in dem Innenraum des Reflektors nicht beeinträchtigt. Das Kühlelement oder der Kühlkörper kann dabei in vorteilhafter Weise ebenfalls flächig oder großvolumig ausgebildet sein und sicher und stabil an dem Reflektorgehäuse, unmittelbar oder über die Leiterplatte, befestigt werden.

Ein weiterer wesentlicher Aspekt der Erfindung besteht darin, dass wenigstens an der ersten Seitenwand und wenigstens an der dieser gegenüberliegenden zweiten Seitenwand des Reflektors jeweils LED's angeordnet werden. Damit ergibt sich bereits grundsätzlich eine über den Innenraum des Reflektors verteilte, das heißt voneinander distanzierte Anordnung der LED's in dem Reflektor. Weiterhin ist vorgesehen, dass der überwiegende Anteil des von einer LED ausgesandten Lichtes erst nach Reflexion an einer anderen Seitenwand, insbesondere erst nach Reflexion an der Seitenwand, die derjenigen Seitenwand gegenüberliegt, an der die LED befestigt ist, zu dem Diffusorelement gelangt. Damit wird sichergestellt, dass jedenfalls nur ein geringer Anteil des von den LED's ausgesandten Lichtes direkt zum Diffusorelement gelangt. Vorzugsweise dann, wenn der überwiegende Anteil des von einer LED ausgesandten Lichtes an der gegenüberliegenden Seitenwand reflektiert wird, besteht die Möglichkeit, dass dieser Lichtanteil dort auf eine ebene Innenfläche trifft, so dass dort eine besonders gut vorherbestimmbare Reflexion stattfindet.

Insgesamt ermöglicht die erfindungsgemäße Ausbildung des Reflektorelementes und die Anordnung der LED's eine besonders gute farbliche Durchmischung der unterschiedlichen Lichtfarben. Bereits bevor das gesamte, von allen LED's ausgesandte Licht auf das Diffusorelement trifft, hat bereits eine gründliche farbliche Durchmischung stattgefunden. Die Durchmischung wird durch das Diffusorelement weiter verbessert.

Ein außerhalb der Leuchte befindlicher Betrachter kann bei unmittelbarem Blick auf das Diffusorelement die einzelnen Lichtquellen nicht mehr hinsichtlich ihrer Anordnung und hinsichtlich ihrer Farbe auflösen. Gleichermaßen wird eine von dieser Leuchte ausgeleuchtete Gebäudefläche hinsichtlich ihrer Intensität und hinsichtlich ihrer Mischfarbe homogen ausgeleuchtet.

Die erfindungsgemäße Leuchte erlaubt darüber hinaus einen sehr effizienten Betrieb, da nur geringe Lichtstromverluste auftreten. Mit einer relativ geringen Zahl an Reflexionen kann bei der erfindungsgemäßen Leuchte eine ausreichende farblich homogene Durchmischung erzielt werden. Der überwiegende Anteil des von einer LED ausgesandten Lichtes trifft nämlich bereits nach einmaliger Reflexion an einer Seitenwand auf das Diffusorelement. Nicht ausgeschlossen ist zwar, dass geringere Lichtanteile des von einer LED ausgesandten Lichtes erst nach mehrmaliger Reflexion an mehreren Seitenwänden oder gegebenenfalls auch an der Bodenwand zu dem Diffusorelement gelangen. Zur Erzielung einer hohen Lichtausbeute wird eine übermäßig hohe Zahl an Reflexionen aber als nachteilig angesehen und kann mit der erfindungsgemäßen Leuchte verhindert werden.

Die erfindungsgemäße Leuchte ermöglicht bei besonders homogener Farbdurchmischung und einfacher Bauweise auch eine sehr kompakte, platzsparende Bauform.

Ein wannenförmiger Reflektor im Sinne der vorliegenden Patentanmeldung ist insbesondere ein axial langgestreckter Reflektor, der eine größere Längserstreckung als Quererstreckung aufweist. Auf diese Bauform ist die Formulierung "wannenförmiger Reflektor" allerdings im Sinne der vorliegenden Patentanmeldung nicht beschränkt. Umfasst von dieser Formulierung sind auch solche Reflektoren, deren Längsabmessungen etwa deren Quererstreckungen entsprechen.

Das wannenförmige Reflektorelement weist eine Lichtaustrittsöffnung auf, in der ein Diffusorelement angeordnet ist. Insbesondere für den Fall, dass die Leuchte als Orientierungsleuchte, Dekorleuchte oder Piktogrammleuchte ausgebildet ist, handelt es sich beispielsweise um ein sehr stark diffus wirkendes Diffusorelement, welches hinterleuchtet ist und sozusagen selbst abstrahlt, beispielsweise um ein Hinweis-Piktogramm zu beleuchten. In diesem Falle stellt die Lichtaustrittsöffnung des wannenförmigen Reflektorelementes zugleich auch die Lichtaustrittsöffnung der Leuchte dar.

Bei anderen Leuchten, beispielsweise bei Wand- oder Deckenflutern, kann im Lichtweg hinter der Lichtaustrittsöffnung des wannenartigen Reflektors bzw. im Lichtweg hinter dem Diffusorelement noch ein weiteres, zusätzliches Reflektorelement, beispielsweise eine als Lichtschaufel bezeichenbare Reflektoranordnung angeordnet sein. Damit wird eine Weiterleitung oder Lenkung eines bereits farblich und hinsichtlich seiner Lichtstärke optimal durchmischten Lichtes ermöglicht.

Gemäß einer vorteilhaften Ausgestaltung der Erfindung ist an einer Außenseite des Abschnittes eine Leiterplatte befestigt, die mehrere LED's trägt. Dies ermöglicht einerseits eine besonders einfache Montage, da mehrere LED's zugleich, also in einem Montageschritt, an dem Reflektorelement befestigt werden können. Außerdem kann auf herkömmliche Bauelemente zurückgegriffen werden, da die flächige Ausbildung des Abschnittes die Anbringung herkömmlicher Befestigungselemente ohne Weiteres ermöglicht. Schließlich kann auch auf herkömmliche Leiterplatten, die typischerweise flächig ausgebildet sind, zurückgegriffen werden.

Gemäß einer weiteren vorteilhaften Ausgestaltung der Erfindung ist die Leiterplatte mittels Schrauben oder/und mittels Rastelementen an dem Abschnitt befestigt. Dies ermöglicht eine besonders einfache Bauweise, wobei auf herkömmliche Befestigungsmittel zurückgegriffen werden kann.

Gemäß einer weiteren vorteilhaften Ausgestaltung der Erfindung ragen die LED's von der Leiterplatte in einen Innenraum des Reflektors hinein. Dies ermöglicht eine besonders vorteilhafte Lichtweiterleitung und Lichtmischung des von den LED's ausgesandten Lichtes innerhalb des Reflektorelementes und eine besonders einfache Anbringung der Leiterplatte und gegebenenfalls von Kühlelementen. Außerdem beeinträchtigen Kühlelement und Leiterplatte die Lichtweiterleitung innerhalb des Reflektorelementes nicht.

Gemäß einer weiteren vorteilhaften Ausgestaltung der Erfindung sind in dem Abschnitt Öffnungen vorgesehen. Diese ermöglichen den Durchtritt der LED's, oder alternativ nur den Durchtritt des von den LED's ausgesandten Lichtes. Im letzten Falle können die LED's auch außerhalb des Innenraumes des Reflektors, beispielsweise unmittelbar benachbart der Öffnungen, angeordnet sein.

Vorzugsweise ragen die LED's wenigstens zu einem Teil durch die Öffnungen hindurch und somit in den Innenraum des Reflektorelementes hinein.

Weiter vorteilhaft ist auf der Außenseite der Leiterplatte ein Kühlkörper angeordnet. Dies ermöglicht die Verwendung herkömmlicher Bauelemente, wobei diese ohne störenden Einfluss auf die Lichtweiterleitung innerhalb des Reflektorelementes außerhalb des Reflektors angeordnet sind.

Gemäß einer weiteren vorteilhaften Ausgestaltung der Erfindung ist wenigstens eine Leiterplatte vorgesehen, auf der mindestens sechs LED's beabstandet voneinander angeordnet sind. Dies ermöglicht eine besonders vorteilhafte homogene Lichtverteilung, da durch die beabstandete, entlang dem Innenraum des Reflektorelementes räumlich verteilte Anordnung der LED's bereits eine gewisse Auflösung der Struktur der Lichtquellen erreicht werden kann. Die beabstandete Anordnung kann weiter vorteilhafterweise so getroffen werden, dass die LED's etwa gleichmäßig verteilt über die Fläche der Leiterplatte angeordnet sind.

Weiter vorteilhafterweise entspricht die Abmessung der Leiterplatte im Wesentlichen einem Großteil der Fläche des Abschnittes bzw. weiter vorteilhafterweise einem Großteil der Fläche der Seitenwand. Damit kann eine besonders gleichmäßige Verteilung der Anordnung der LED's über die gesamte Reflektorinnenfläche erfolgen, was für eine weiter verbesserte homogene Farbdurchmischung sorgt.

Gemäß einer weiteren vorteilhaften Ausgestaltung der Erfindung ist wenigstens eine Leiterplatte vorgesehen, auf der mindestens zwei rote, zwei blaue und zwei grüne LED's beabstandet voneinander angeordnet sind. Dies ermöglicht eine weiter vorteilhafte homogene Farbdurchmischung bei einfacher Bauweise, wobei auf herkömmliche Leiterplatten zurückgegriffen werden kann.

Gemäß einer weiteren vorteilhaften Ausgestaltung der Erfindung weist der Reflektor vier Seitenwände, und insbesondere eine Bodenwand, auf. Dies ermöglicht eine besonders einfache Bauweise des Reflektorelementes aus fünf Bauteilen, wobei jedes der Bauteile aus einem plattenförmigen Körper bestehen kann. Weiter vorteilhafterweise erstrecken sich die beiden Seitenwände, insbesondere sämtliche Seitenwände, gegebenenfalls auch die Bodenwand, jeweils entlang einer Ebene. Dies ermöglicht eine besonders einfache Bauweise und eine besonders gute Vorherbestimmbarkeit der Lichtverteilung der Leuchte.

Gemäß einer weiteren vorteilhaften Ausgestaltung der Erfindung sind die LED's zur Erzielung einer änderbaren Mischfarbe der Leuchte einzeln oder als Gruppe ansteuerbar. Typischerweise wird die Leuchte über eine Signalleitung mit einer zentralen Steuerung verbunden und kann von dieser Steuersignale, beispielsweise gemäß dem DALI-Protokoll, empfangen. Die einzelnen LED's sind hinsichtlich ihrer Intensität ansteuerbar und können unterschiedliche Mischfarben der Leuchte erzeugen.

Gemäß einer weiteren vorteilhaften Ausgestaltung der Erfindung erweitert sich der wannenförmige Reflektor zu der Lichtaustrittsöffnung hin. Dies ermöglicht eine besonders gute Lichtweiterleitung des Gesamtlichtstromes von den LED's hin zu der Lichtaustrittsöffnung bei einer nur sehr geringen Zahl an Reflexionen, so dass insgesamt eine hohe Lichteffizienz, das heißt Lichtausbeute, erreichbar ist.

Gemäß einer weiteren vorteilhaften Ausgestaltung der Erfindung weist das Reflektorelement einen im Wesentlichen trapezförmigen Querschnitt auf. Dies ermöglicht eine besonders einfache Bauweise und eine besonders gute farbliche Durchmischung des von den LED's unterschiedlicher Farben ausgesandten Lichtes.

Gemäß einer weiteren vorteilhaften Ausgestaltung der Erfindung weist das Reflektorelement einen im Wesentlichen dreieckförmigen Querschnitt auf. Dies ermöglicht gleichermaßen eine einfache Bauweise.

Gemäß einer weiteren vorteilhaften Ausgestaltung der Erfindung weist das Reflektorelement einen im Wesentlichen rechteckigen Querschnitt auf. Dies ermöglicht gleichermaßen eine besonders einfache Bauweise der Leuchte.

Gemäß einer weiteren vorteilhaften Ausgestaltung der Erfindung ist im Lichtweg hinter dem Diffusorelement und/oder im Lichtweg hinter der Lichtaustrittsöffnung des wannenförmigen Reflektors ein zweites Reflektorelement angeordnet. Diese Ausgestaltung ermöglicht in besonders vorteilhafter Weise eine z.B. als Wandfluter oder Deckenfluter ausgebildete Leuchte, die das in dem wannenförmigen Reflektor farblich und hinsichtlich der Lichtverteilung optimal durchmischte Licht weiterlenkt und somit zielgerichtet z.B. an eine Gebäudefläche werfen kann. Dies ermöglicht beispielsweise die Konstruktion von Leuchten mit hoher Blendfreiheit bei kompakter Bauweise.

Weitere Vorteile der Erfindung ergeben sich aus den nicht zitierten Unteransprüchen sowie anhand der nun folgenden Beschreibung der in den Zeichnungen dargestellten Ausführungsbeispiele. Darin zeigen:
- Fig. 1: in einer schematischen Darstellung einen Raum eines Gebäudes mit einem Ausführungsbeispiel einer erfindungsgemäßen Leuchte, die an einer Deckenwand des Raumes angeordnet ist und eine Seitenwand des Raumes ausleuchtet,
- Fig. 2: in einer Detaildarstellung eine schematische, teilgeschnittene Ansicht des Reflektorelementes des ersten Ausführungsbeispieles der in Fig. 1 angedeuteten Leuchte mit einem im Wesentlichen trapezförmigen Reflektorelement,
- Fig. 3: das Ausführungsbeispiel der Fig. 2 in einer Seitenansicht gemäß Ansichtspfeil III in Fig. 2,
- Fig. 4: das Ausführungsbeispiel der Fig. 2 in Draufsicht gemäß Ansichtspfeil IV in Fig. 3, wobei der Diffusor der Übersichtlichkeit halber weggelassen worden ist.
- Fig. 5: ein zweites Ausführungsbeispiel einer erfindungsgemäßen Leuchte mit einem Reflektorelement mit dreieckförmigem Querschnitt in einer Darstellung gemäß Fig. 2,
- Fig. 6: ein drittes Ausführungsbeispiel einer erfindungsgemäßen Leuchte in einer Darstellung gemäß Fig. 2 mit einem Reflektorelement mit im Wesentlichen rechteckförmigem Querschnitt, und
- Fig. 7: ein viertes Ausführungsbeispiel einer erfindungsgemäßen Leuchte in einer Darstellung gemäß Fig. 2 mit einem im Lichtweg hinter der Lichtaustrittsöffnung des wannenförmigen Reflektorelementes angeordneten zweiten Reflektorelement.

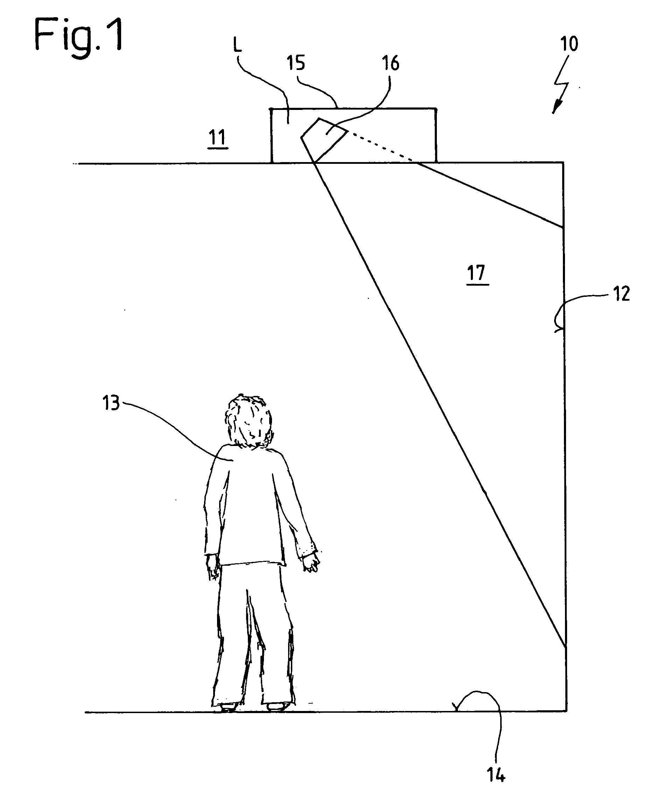

Die in ihrer Gesamtheit in den Figuren mit 10 bezeichnete Leuchte ist gemäß Fig. 1 in einer Deckenwand 11 eines Raumes eines Gebäudes angeordnet. Sie dient zur Ausleuchtung einer Wandfläche 12, kann aber auch gleichermaßen, auf nicht dargestellte Weise, zur Ausleuchtung einer Bodenfläche 14 oder zur Ausleuchtung eines nicht dargestellten Objektes oder einer Außenraumfläche eingesetzt werden. Die dargestellte Person 13 verdeutlicht die Situation des Raumes.

Die Leuchte umfasst gemäß Fig. 1 ein nur schematisch dargestelltes Leuchtengehäuse 15 mit einem Leuchteninnenraum L, in dem ein Reflektorelement 16 angeordnet ist, welches später detailliert beschrieben ist. Die Leuchte 15 ist in Fig. 1 lediglich schematisch skizziert und kann beispielsweise auch ein nicht dargestelltes Leuchtenabschlussglas in der Lichtaustrittsöffnung der Leuchte aufweisen. Gleichermaßen kann die Form des Gehäuses 15 der Leuchte, was in den Zeichnungen nicht dargestellt ist, auch sehr stark an die Form des Reflektorelementes 16 angenähert oder angepasst sein. Die Abmessungen des Gehäuses 15 der Leuchte 10 müssen die Abmessungen des Reflektorelementes 16 nicht wesentlich übersteigen. Damit wird insgesamt auch eine sehr kompakte Bauform der Leuchte 10 möglich. Fig. 1 zeigt demgegenüber ein Leuchtengehäuse 15, welches weitaus größere Abmessungen aufweist, als das Reflektorelement 16.

Vorzugsweise sind innerhalb des Leuchteninnenraumes L aber außerhalb des Reflektors 16 Anschlusselemente, wie Betriebsgeräte für die Leuchtmittel, z.B. Transformatoren oder Steuergeräte, und Anschlussleitungen etc. angeordnet. Die Leuchte kann über eine Signalleitung mit einer nicht dargestellten Steuerung verbunden sein und ist selbstverständlich auch mit Spannungsversorgungsleitungen verbunden.

Innerhalb der Leuchte 15 sind erfindungsgemäße mehrere unterschiedlich farbige Leuchtmittel in Form von LED's angeordnet. Die Leuchte 10 soll ein hinsichtlich seiner Intensität und hinsichtlich seiner farblichen Durchmischung homogenes Licht aussenden, so dass die Wandfläche 12 im Bereich des Lichtkegels 17 so homogen wie möglich ausgeleuchtet wird. Gleichermaßen ist das Ziel der Erfindung, dass der Benutzer 13 aus unterschiedlichen Blickwinkeln bei Betrachtung der Leuchte 15 die dort befindlichen Leuchtmittel nicht auflösen kann.

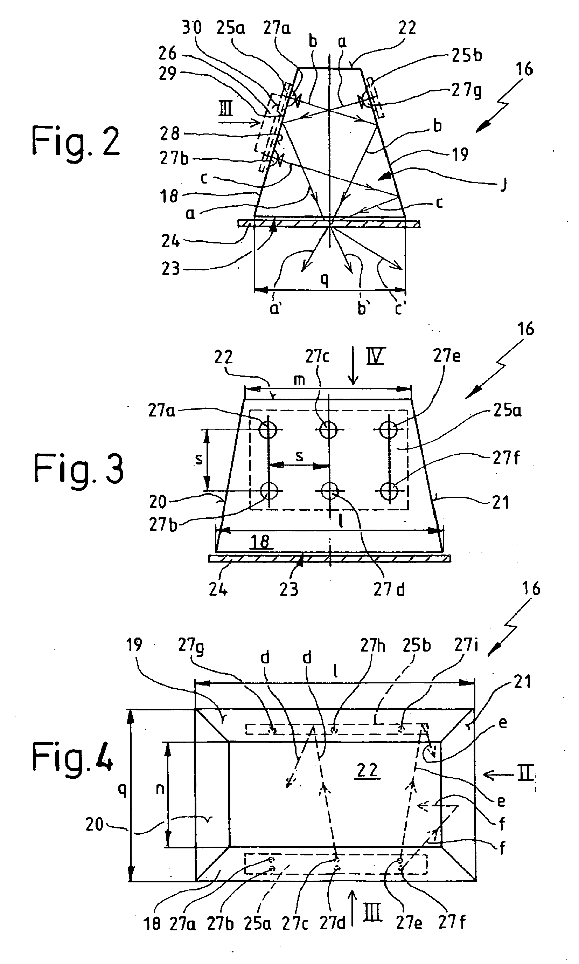

Fig. 2 zeigt in detaillierter Ansicht sehr schematisch, in einem teilgeschnitten Querschnitt, ein erstes Ausführungsbeispiel eines erfindungsgemäßen Reflektorelementes 16 der Leuchte 10. Das Reflektorelement 16 ist im Wesentlichen wannenförmig und im Querschnitt sowie im Längsschnitt trapezförmig ausgebildet und weist, wie sich am Besten aus Fig. 4 erkennen lässt, eine maximale Längserstreckung I und eine maximale Quererstreckung q im Bereich einer Lichtaustrittsöffnung 23 des Reflektors 16 auf. Die eigentliche Lichtaustrittsöffnung 23 weist somit die flächige Abmessung I x q auf.

Das Reflektorelement 16 weist eine erste Seitenwand 18 und eine dieser gegenüberliegende zweite Seitenwand 19 auf. Die beiden Seitenwände 18, 19 sind jeweils über eine dritte Seitenwand 20 und eine vierte Seitenwand 21 miteinander verbunden. Die jeweils oberen Bereiche der vier Seitenwände 18, 19, 20, 21 sind über eine Bodenwand 22 miteinander verbunden.

Bei Betrachtung der Schnittdarstellungen ist sowohl im Querschnitt gemäß Fig. 2 als auch im Längsschnitt gemäß Fig. 3 bei dem Ausführungsbeispiel der Figuren 2 bis 4 eine im Wesentlichen trapezförmige Grundform erkennbar. Der Innenraum J des Reflektorelementes 16 erweitert sich somit von der Bodenplatte 22 hin zur Lichtaustrittsöffnung 23 konisch.

Im Bereich der Lichtaustrittsöffnung 23 des Reflektorelementes 16 ist ein Diffusorelement 24 angeordnet, welches von einem herkömmlichen, scheibenförmigen Element, z.B. nach Art eines mattierten, z.B. sandgestrahlten Glaskörpers, einer Folie od. dgl. bereitgestellt sein kann.

An der ersten Seitenwand 18 des Reflektorelementes 16 ist eine Leiterplatte 25a angeordnet, die mit ihrer Innenseite 28 an der Außenseite 29 der ersten Seitenwand 18 anliegt oder zumindest entlang dieser ausgerichtet ist. Da die erste Seitenwand 18 entlang einer Ebene angeordnet ist und mithin einen flächigen oder plattenförmigen Körper darstellt, kann auch die Leiterplatte 25a flächig, das heißt im Wesentlichen eben, ausgebildet sein. Eine Befestigung der Leiterplatte 25a erfolgt an der ersten Seitenwand 18 beispielsweise durch in Fig. 2 nicht dargestellte Schraubelemente oder alternativ durch Clipselemente, durch entsprechende Rastmittel od. dgl.

An der Leiterplatte 25a sind, wie am Besten aus den Figuren 3 und 4 ersichtlich ist, insgesamt sechs LED's 27a, 27b, 27c, 27d, 27e, 27f befestigt. Die LED's können beispielsweise so genannte side-emitting-LED's oder auch so genannte lambertianische LED's sein. Diese beiden Arten von LED's unterscheiden sich grundsätzlich hinsichtlich ihrer Abstrahlcharakteristik und sind im Stand der Technik hinlänglich bekannt.

Die LED's sind typischerweise auf der Leiterplatte festgelötet und werden über die Leiterplatte mit Betriebsspannung versorgt. Die Leiterplatte weist hierfür entsprechende Leiterbahnen, gegebenenfalls auch elektronische Bauelemente auf, wobei auf die Ansteuerung und die Anschlussmittel zur Ansteuerung der LED's an dieser Stelle nicht weiter eingegangen werden soll.

Angemerkt sei, dass auf der dem Innenraum J abgewandten Seite 30 der Leiterplatte 25a ein Kühlkörper 26 angeordnet ist, der die von den LED's im Betrieb erzeugte Wärme abführen kann. Auch der Kühlkörper 26 kann im Wesentlichen block- oder quaderförmig, gegebenenfalls auch plattenförmig, ausgebildet sein und somit eine große Oberfläche, die für die Kühlung erforderlich ist, bereitstellen.

Aus der schematischen Darstellung gemäß Fig. 3 ist ersichtlich, dass die einzelnen LED's 27a, 27b, 27c, 27d, 27e, 27f voneinander jeweils um einen Abstand s voneinander beabstandet sind. Mithin sind die LED's 27a, 27b, 27c, 27d, 27e, 27f rasterartig entlang der ersten Seitenwand 18 verteilt angeordnet, so dass sich eine gewisse, vergleichmäßigte Lichtverteilung erzeugen lässt. Die LED's 27a, 27b, 27c, 27d, 27e, 27f sind, wie sich aus Fig. 3 erkennen lässt, im Wesentlichen gleichmäßig über die Fläche der Seitenwand 18 verteilt angeordnet.

In der ersten Seitenwand 18 sind sechs nicht dargestellte Öffnungen angeordnet, durch die die auf der Leiterplatte 25a befestigten LED's 27a, 27b, 27c, 27d, 27e, 27f jeweils hindurchragen und, was Fig. 2 schematisch andeutet, in den Innenraum J hineinragen.

Je nachdem, welche Art von LED gewählt wird, z.B. side-emitting-LED's oder lambertianische LED's, senden diese LED's unterschiedliche Lichtverteilungen aus. Beide Sorten von LED's können verwendet werden. Der Lichtweg innerhalb des Reflektors 16 wird später beschrieben.

Zunächst sei noch angemerkt, dass auch auf der der ersten Seitenwand 18 gegenüberliegenden zweiten Seitenwand 19 eine in Fig. 2 lediglich schematisch dargestellte Leiterplatte 25b angeordnet ist, auf der drei LED's 27g, 27h und 27i befestigt sind (vgl. Fig. 4). Gleichermaßen kann für die Leiterplatte 25b ein Kühlkörper vorgesehen sein, der in Fig. 2 allerdings nicht dargestellt ist. Auch die zweite Seitenwand 19 ist entlang einer Ebene angeordnet.

Das Ausführungsbeispiel der Figuren 2 bis 4 zeigt an der ersten Wand 18 eine Leiterplatte 25a mit sechs LED's und an der zweiten Wand 19 eine Leiterplatte 25b mit drei LED's. Gleichermaßen kann an der zweiten Seitenwand 19 ebenfalls eine größere Leiterplatte, auch mit mehr als 6 LED's, angebracht sein. Auch kann an der ersten Seitenwand 18 anstelle einer großen Leiterplatte mit sechs LED's eine kleinere Leiterplatte mit nur drei LED's angebracht sein.

Vorzugsweise werden die ebenen Abschnitte der Seitenwände 18 und 19 aber zur Erzielung einer kompakten Bauform des Reflektorelementes 16 derartig mit LED's bestückt, dass die LED's über die Fläche der jeweiligen Seitenwand 18, 19 gleichmäßig verteilt angeordnet sind. Dementsprechend wird man überwiegend Leiterplatten verwenden, die in ihren Abmessungen an die Abmessungen der jeweiligen Seitenwand angenähert sind und möglichst einen großen Teil der Fläche der Seitenwand ausfüllen.

Anstelle einer großflächigen Leiterplatte, wie beispielsweise der Leiterplatte 25a an der Seitenwand 18, können auch mehrere kleinere Leiterplatten nebeneinander angeordnet sein und gleichermaßen Abmessungen aufweisen, die in ihrer Summe im Wesentlichen der Abmessungen der Seitenwand oder wenigstens dem Abschnitt der Seitenwand entsprechen.

An dieser Stelle sei im Übrigen angemerkt, dass die Innenseiten der Seitenwände 18, 19, 20, 21 und der Bodenwand 22 des Reflektors 16 gemäß den Figuren 1 bis 3 reflektierend, vorzugsweise hoch reflektierend ausgebildet sind.

Im Folgenden soll nunmehr die vorteilhafte farbliche Durchmischung des von den LED's ausgesandten Lichtes anhand der Fig. 2 erläutert werden:

Die LED 27a sendet gemäß Fig. 2 beispielsweise einen Lichtstrahl b aus, der an der zweiten Seitenwand 19 reflektiert wird und anschließend auf den Diffusor 24 trifft.

Die LED 27b sendet einen Lichtstrahl c aus, der ebenfalls an der zweiten Seitenwand 19 reflektiert wird und anschließend auf den Diffusor 24 trifft.

Die LED 27g sendet einen entsprechenden Lichtstrahl a aus, der an der Seitenwand 18 reflektiert wird, bevor er auf das Diffusorelement 24 trifft.

Unabhängig davon, ob lambertianische öder side-emitting-LED's verwendet werden, sind die in Fig. 2 dargestellten drei Lichtstrahlen a, b, c repräsentativ. Der überwiegende Anteil des von der LED 27g ausgesandten Lichtes wird an der ersten Seitenwand 18 reflektiert, bevor er auf das Diffusorelement 24 trifft. Gleichermaßen wird der überwiegende Anteil des von der LED 27a ausgesandten Lichtes und des von der LED 27b ausgesandten Lichtes an der zweiten Seitenwand 19 reflektiert.

Auf das Diffusorelement 24 trifft somit farblich durchmischtes Licht. Wie bei einem Diffusorelement 24 typisch, kann das Diffusorelement dann eine weitere Durchmischung des Lichtes durchführen, was durch die austretenden Pfeile a', b' und c' angedeutet werden soll.

Wie sich aus Fig. 4 ergibt, wird der überwiegende Anteil des von den LED's ausgesandten Lichtes jeweils an der gegenüberliegenden Seitenwand reflektiert. Dies gelingt durch eine geeignete Ausrichtung der LED's und der Seitenwände 18, 19. Im Falle einer am seitlichen Rand an der Leiterplatte 25a angeordneten LED (z.B. LED 27e) kann so z.B. ein durch den Lichtstrahl e angedeuteter Lichtanteil an der gegenüberliegenden Seitenwand 19 reflektiert werden, bevor er durch das Diffusorelement 24 austritt. Hingegen kann ein anderer, durch den Lichtstrahl f angedeuteter Lichtanteil dieser LED 27e an einer schmalen Seitenwand 21 des Reflektors 16 reflektiert werden, bevor er durch das in Blickrichtung des Betrachters der Fig. 4 hinten liegende Diffusorelement 24 austritt. Die den Lichtweg verdeutlichenden Pfeile d, e und f der Fig. 4 enden an den Stellen, an denen das Licht durch das Diffusorelement 24 hindurch aus dem Innenraum J des Reflektorelementes 16 austritt.

Dadurch, dass der überwiegende Anteil sämtlicher Lichtstrahlen zunächst wenigstens einmal an einer Seitenwand reflektiert wird, bevor sie auf das Diffusorelement treffen, ist die Summe des das Diffusorelement 24 erreichenden Lichtes bereits farblich durchmischt. Das Diffusorelement 24 kann dann die Farbdurchmischung weiter verbessern.

Angemerkt sei, dass die maximale Quererstreckung q des Reflektorelementes 16 beispielsweise zwischen 20 mm und 150 mm, vorzugsweise in der Größenordnung von 50 mm, liegen kann, und dass die Längserstreckung I des Reflektorelementes 16 in dem Bereich zwischen 30 mm und 150 mm, vorzugsweise in der Größenordnung von 75 mm, liegen kann. Gleichermaßen kann die Bodenwand 22 eine Längserstreckung m in einem Bereich zwischen 30 mm und 90 mm, vorzugsweise in der Größenordnung von 55 mm, und eine Quererstreckung n beispielsweise in der Größenordnung von 10 mm bis 50 mm, vorzugsweise etwa 21 mm, aufweisen.

Angemerkt sei, dass die dargestellte Anordnung der Leiterplatten 25a und 25b sowie die entsprechende Ausbildung der zugehörigen Seitenwände 18 und 19 nur beispielhaft zu verstehen ist. Von entscheidender Bedeutung ist, dass zwei einander gegenüberliegende Seitenwände 18 und 19 vorgesehen sind, die zumindest einen ebenen Abschnitt aufweisen, an der eine Leiterplatte mit LED's befestigbar ist. Vorzugsweise, wie bei den Ausführungsbeispielen dargestellt, ist jeweils die gesamte Seitenwand 18, 19, 20, 21 entlang einer Ebene, das heißt flach, ausgebildet.

Weiter ist die angegebene Zahl der LED's auf einer Leiterplatte nur beispielhaft zu verstehen. Vorzugsweise sind zwischen 6 und 30 LED's in einem wannenförmigen Reflektor 16 angeordnet. Die Zahl der LED's, deren Anordnung, welche LED welcher Farbe an welchem Ort angeordnet ist, und wie groß die Abstände der LED's voneinander sind, hängt jedoch von dem beabsichtigten Anwendungszweck, von der Gesamtgröße des Reflektors 16 und von dem gewünschten Lichtstrom ab.

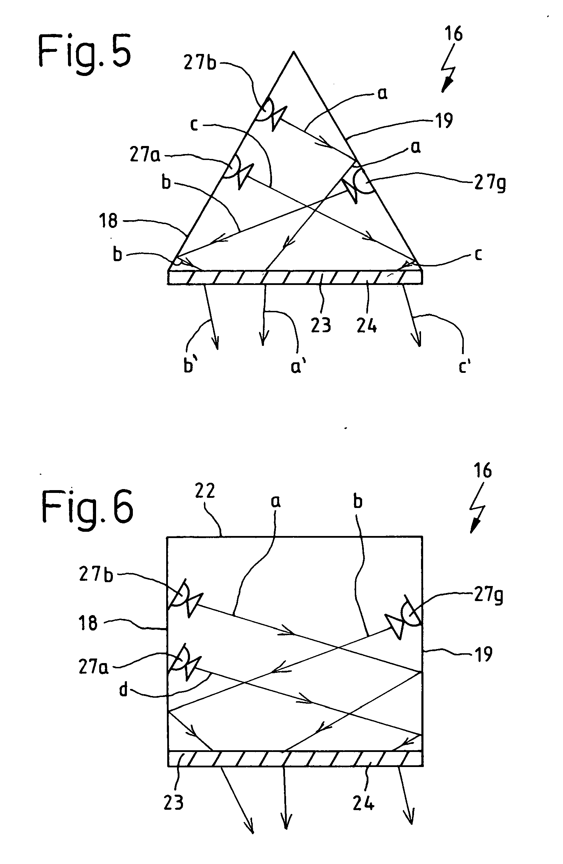

Das Ausführungsbeispiel der Fig. 5 in einer Darstellung analog zu Fig. 2 zeigt einen im Wesentlichen dreieckförmigen Reflektor 16 mit einer vergleichbaren Anordnung von LED's. Leiterplatte und Kühlkörper sind hier nicht dargestellt. Die farbliche Durchmischung des von den LED's 27a, 27b, 27g ausgesandten Lichtes erfolgt auf vergleichbare Weise, wie bei dem zuvor beschriebenen Ausführungsbeispiel.

Das Ausführungsbeispiel der Fig. 5 macht eine Bodenwand 22 gemäß der Fig. 2 entbehrlich. Falls eine Bodenwand vorgesehen ist, trägt auch die Bodenwand 22 zur Reflexion und zur Lichtweiterleitung hin zur Lichtaustrittsöffnung 23 des Reflektorelementes 16 bei.

Ein drittes Ausführungsbeispiel gemäß Fig. 6 sieht einen im Wesentlichen rechteckförmigen Querschnitt des Reflektorelementes 16 vor. Hier sind die LED's 27a, 27b und 27g, bezogen auf die jeweilige Seitenwand 18 bzw. 19, geringfügig geneigt angeordnet, wobei die dargestellte Neigung übertrieben ist. Gleichermaßen können die LED's 27a und 27b auf einer gemeinsamen, nicht dargestellten Leiterplatte angeordnet sein, die auch einen entsprechenden Stufenversatz aufweisen kann, um die in Fig. 6 dargestellte, gewünschte Anordnung der LED's zu erreichen. Alternativ können den LED's 27a und 27b aber auch unterschiedliche Leiterplatten zugeordnet sein. Schließlich ist es möglich, die LED's, bezogen auf die in Fig. 6 nicht dargestellte Leiterplatte, geringfügig geneigt anzuordnen, so dass die Leiterplatte, bezogen auf die jeweilige Seitenwand 18 bzw. 19, daran flächig anliegend befestigt werden kann. Dies erleichtert wiederum die Befestigung der Leiterplatte an der Seitenwand.

Angemerkt sei, dass die in den Figuren dargestellten LED's übertrieben groß dargestellt sind und typischerweise solche geringen Abmessungen aufweisen, dass die LED selbst bei der farblichen Durchmischung des Lichtes keine Beeinträchtigungen ausübt, und insbesondere keinen Lichtschatten erzeugt.

Die in den Seitenwänden 18, 19 befindlichen Öffnungen, durch die die LED's 27a, 27b, 27c, 27d, 27e, 27f, 27g, die an der entsprechenden Leiterplatte 25a, 25b befestigt sind, hindurchtreten und in den Innenraum J des Reflektors 16 hineinragen, sind in den Zeichnungen nicht dargestellt. Bei Betrachtung der Fig. 3 wird aber deutlich, dass sich die Öffnungen in der entsprechenden Seitenwand an der Stelle befinden, an der die LED's angeordnet sind.

Wie sich aus dem Vorstehenden ergibt, sind die relevanten Seitenwände 18, 19, an denen LED's befestigt sind, vollständig eben ausgebildet und stellen somit den erfindungsgemäßen ebenen Abschnitt dar. Bei anderen, nicht dargestellten Reflektorformen müssen die Seitenwände 18, 19 nicht vollständig eben ausgebildet sein, sondern können auch Wölbungen oder Krümmungen aufweisen und lediglich einen ebenen Abschnitt zur Anbringung der Leiterplatte umfassen.

Bei einem nicht dargestellten Ausführungsbeispiel können auch die Schmal- oder Stirnseitenwände 20 und 21 mit LED's besetzt sein. Vorzugsweise, bereits aufgrund der größeren Fläche, sind die LED's allerdings an den Längsseitenwänden 18, 19 angeordnet.

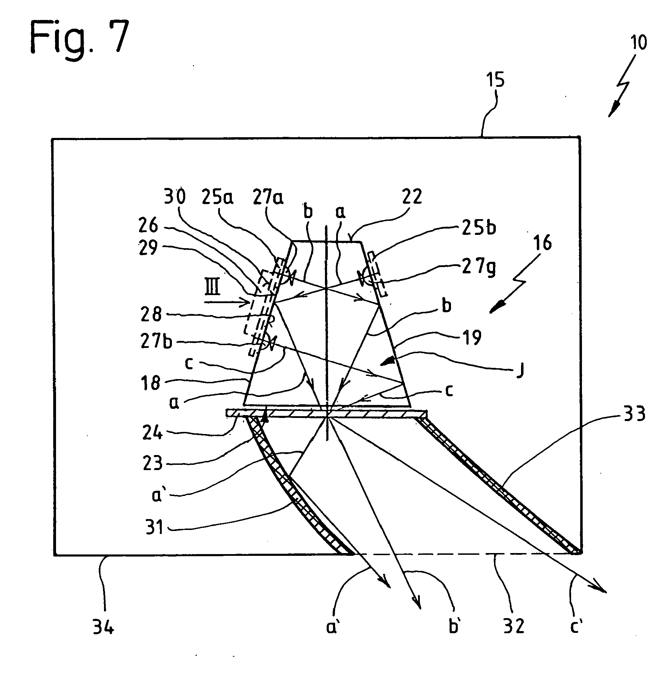

Anhand der Fig. 7 sei nunmehr ein weiteres Ausführungsbeispiel einer erfindungsgemäßen Leuchte 10 beschrieben. Dargestellt ist hier eine Leuchte 10 mit einem Leuchtengehäuse 15, in dessen Innenraum das Reflektorelement der Fig.2 angeordnet ist, wobei hier im Lichtwege hinter der Lichtaustrittsöffnung 23 des Reflektorelementes 16 noch ein Sekundär-Reflektorelement oder zweites Reflektorelement 31 angeordnet ist. Das zweite Reflektorelement 31 ist im Wesentlichen schaufelartig, das heißt gewölbt oder gekrümmt, ausgebildet und dient dazu, das von den LED's ausgesandte Licht im Wesentlichen hin zu der in Fig. 7 nicht dargestellten Gebäudewand 12 (vergleiche Fig. 1) zu werfen. Das zweite Reflektorelement 31 schließt sich unmittelbar an das Reflektorelement 16 oder an das Diffusorelement 24 an und kann beispielsweise im Bereich einer Lichtaustrittsöffnung 32 der Leuchte 10 enden. Weitere Reflektorelemente, wie das in Fig. 7 dargestellte Reflektorelement 33, können ebenfalls vorgesehen sein. Die Reflektorelemente 31 und 33 können fest mit dem Leuchtengehäuse 15 verbunden sein und auch eine Tragstruktur zur Festlegung des Reflektorelementes 16 bilden.

Bei Betrachtung der Fig. 7 wird deutlich, dass lediglich ein Teil des durch das Diffusorelement 24 hindurchtretenden Lichtes, beispielhaft verdeutlicht durch den Lichtpfeil a' auf das Reflektorelement 31 trifft. Andere Lichtanteile, angedeutet verdeutlicht durch die Lichtpfeile c' und b', treten durch das Diffusorelement 24 hindurch und verlassen die Leuchte 10 durch die Lichtaustrittsöffnung 32 der Leuchte 10, ohne auf eines der Reflektorelemente 31 oder 33 zu treffen.

Wie anhand der Fig. 7 ebenfalls deutlich wird, besteht auch die Möglichkeit, das wannenförmige Reflektorelement 16 in unterschiedlichen Leuchten, die unterschiedliche Sekundär-Reflektorelemente 31 aufweisen, einzusetzen. So kann beispielsweise auf eine kompakte Baueinheit gemäß Fig. 2 in identischer oder vergleichbarer Form zurückgegriffen werden, die in unterschiedlichen Leuchten 10, die unterschiedliche Sekundär-Reflektorelemente 31 aufweisen, eingesetzt wird. Dies ermöglicht eine modulartige Bauweise von Leuchten.

## Patentansprüche

1. Leuchte (10), insbesondere zur Befestigung an einer Gebäude- oder Gebäudeteilfläche (11), umfassend einen wannenförmigen, eine reflektierende Innenseite aufweisenden Reflektor (16) mit wenigstens zwei Seitenwänden, wobei eine erste Seitenwand (18) einer zweiten Seitenwand (19) gegenüberliegt, und mit einer Lichtaustrittsöffnung (23), in der ein Diffusorelement (24) angeordnet ist, **dadurch gekennzeichnet, dass** zumindest die erste Seitenwand (18) und die dieser gegenüberliegende zweite Seitenwand (19) jeweils wenigstens einen entlang einer Ebene ausgerichteten Abschnitt (18, 19) aufweisen, an dem mehrere LED's (27a, 27b, 27c, 27d, 27e, 27f, 27g) angeordnet sind, wobei die Leuchte LED's unterschiedlicher Farben aufweist, und wobei die LED's derart angeordnet sind, dass der überwiegende Anteil des von einer an einer Seitenwand (18) angeordneten LED (27a) ausgesandten Lichtes erst nach Reflexion an einer anderen Seitenwand (19) zu dem Diffusorelement (24) gelangt.

2. Leuchte nach Anspruch 1, **dadurch gekennzeichnet, dass** an einer Außenseite (29) des Abschnittes (18) eine Leiterplatte (25a) befestigt ist, die mehrere LED's (27a, 27b, 27c, 27d, 27e, 27f) trägt.

3. Leuchte nach Anspruch 2, **dadurch gekennzeichnet, dass** die Leiterplatte (25a) mittels Schrauben und/oder mittels Rastelementen an dem Abschnitt (18) befestigt ist.

4. Leuchte nach Anspruch 2 oder 3, **dadurch gekennzeichnet, dass** die LED's von der Leiterplatte (25a) in einen Innenraum (J) des Reflektors (16) hineinragen.

5. Leuchte nach einem der Ansprüche 2 bis 4, **dadurch gekennzeichnet, dass** in dem Abschnitt (18, 19) Öffnungen vorgesehen sind.

6. Leuchte nach Anspruch 5, **dadurch gekennzeichnet, dass** die LED's wenigstens zu einem Teil durch die Öffnungen hindurchragen.

7. Leuchte nach einem der Ansprüche 2 bis 6, **dadurch gekennzeichnet, dass** auf der Außenseite (30) der Leiterplatte (25a) ein Kühlkörper (26) angeordnet ist.

8. Leuchte nach einem der Ansprüche 2 bis 7, **dadurch gekennzeichnet, dass** wenigstens eine Leiterplatte (25a) vorgesehen ist, auf der mindestens sechs LED's (27a, 27b, 27c, 27d, 27e, 27f) beabstandet voneinander angeordnet sind.

9. Leuchte nach Anspruch 8, **dadurch gekennzeichnet, dass** wenigstens eine Leiterplatte (25a) vorgesehen ist, auf der mindestens zwei rote (27a, 27d), zwei blaue (27c, 27f) und zwei grüne LED's (27b, 27e), beabstandet voneinander, angeordnet sind.

10. Leuchte nach einem der vorgenannten Ansprüche, **dadurch gekennzeichnet, dass** der Reflektor (16) vier Seitenwände (18, 19, 20, 21) aufweist.

11. Leuchte nach einem der vorgenannten Ansprüche, **dadurch gekennzeichnet, dass** der Reflektor (16) eine Bodenwand (22) aufweist.

12. Leuchte nach einem der vorgenannten Ansprüche, insbesondere nach Anspruch 10, **dadurch gekennzeichnet, dass** sich die erste und die zweite Seitenwand (18, 19), insbesondere die vier Seitenwände, jeweils entlang einer Ebene erstrecken.

13. Leuchte nach einem der vorgenannten Ansprüche, **dadurch gekennzeichnet, dass** das Reflektorelement (16) aus wenigstens fünf Bauteilen (18, 19, 20, 21, 22) besteht, die aneinander befestigt sind.

14. Leuchte nach einem der vorgenannten Ansprüche, **dadurch gekennzeichnet, dass** die LED's zu Erzielung einer änderbaren Mischfarbe der Leuchte einzeln, oder als Gruppe, ansteuerbar sind.

15. Leuchte nach einem der vorgenannten Ansprüche, **dadurch gekennzeichnet, dass** sich der wannenförmige Reflektor (16) zu der Lichtaustrittsöffnung (23) hin erweitert.

16. Leuchte nach einem der vorgenannten Ansprüche, **dadurch gekennzeichnet, dass** das Reflektorelement (16) einen im Wesentlichen trapezförmigen Querschnitt (Fig. 2) aufweist.

17. Leuchte nach einem der Ansprüche 1 bis 15, **dadurch gekennzeichnet, dass** das Reflektorelement einen im Wesentlichen dreieckförmigen Querschnitt (Fig. 5) aufweist.

18. Leuchte nach einem der Ansprüche 1 bis 15, **dadurch gekennzeichnet, dass** das Reflektorelement einen im Wesentlichen rechteckigen Querschnitt (Fig. 6) aufweist.

19. Leuchte nach einem der vorgenannten Ansprüche, **dadurch gekennzeichnet, dass** die Lichtaustrittsöffnung (23) rechteckig ausgebildet ist.

20. Leuchte nach einem der vorgenannten Ansprüche, **dadurch gekennzeichnet, dass** im Lichtwege hinter der Lichtaustrittsöffnung (23) des Reflektors (16) ein zweites Reflektorelement (31) angeordnet ist.

21. Leuchte nach Anspruch 20, **dadurch gekennzeichnet, dass** das zweite Reflektorelement (31) nach Art einer Lichtschaufel ausgebildet, insbesondere gekrümmt ist.

22. Leuchte nach Anspruch 20 oder 21, **dadurch gekennzeichnet, dass** auf das zweite Reflektorelement (31) nur ein Anteil des durch das Diffusorelement (24) hindurchtretenden Lichtes trifft.
